Europäisches Patentamt

European Patent Office

Office européen des brevets

(11) Publication number: **0 174 778**
**B1**

(12) EUROPEAN PATENT SPECIFICATION

(45) Date of publication of patent specification: **30.11.88**

(51) Int. Cl.⁴: **H 04 N 9/11, G 02 B 27/14**

(21) Application number: **85306135.6**

(22) Date of filing: **29.08.85**

(54) **Apparatus for individually processing optical images of different Wavelengths.**

(30) Priority: **30.08.84 GB 8421910**

(43) Date of publication of application:
**19.03.86 Bulletin 86/12**

(45) Publication of the grant of the patent:
**30.11.88 Bulletin 88/48**

(84) Designated Contracting States:
**CH DE FR IT LI NL**

(56) References cited:
**GB-A-1 078 492**
**GB-A-1 547 812**
**GB-A-2 129 962**

(73) Proprietor: **RANK CINTEL LIMITED**
**Watton Road**
**Ware Hertfordshire SG12 OAE (GB)**

(72) Inventor: **Mumford, Ronald Walter John**
**85 Grovelands Avenue**
**Hitchin Hertfordshire (GB)**

(74) Representative: **Abnett, Richard Charles et al**
**REDDIE & GROSE 16 Theobalds Road**
**London WC1X 8PL (GB)**

Courier Press, Leamington Spa, England.

## Description

The present invention relates to apparatus for individually processing optical images of different wavelength ranges, comprising an objective lens (10, 30), means (32) for splitting light passed by the objective lens into a plurality of beams containing different wavelength ranges respectively, and separate image receptors (34) from the respective beams. One such apparatus is known from United Kingdom patent GB—A—1078492 which relates to a colour television camera. The invention may be applied also, for instance, in conjunction with telecine apparatus.

The design of a lens or other optical component becomes, in general, more difficult the wider the spectrum of light which the lens must focus. This spectrum is referred to herein as the working spectrum of the lens. A very wide working spectrum is used in telecine projectors which convert images on cinematographic film into video signals. The spectrum may range from about 400 nm (blue) to about 900 nm (near infra-red).

A telecine projector comprises a film gate through which the film is fed, a light source illuminating film in the film gate and an objective lens system focusing an image of the illuminated film onto an array of sensors, for instance CCD sensors. The light is split by a prism block into blue, green, red and infra-red beams before reaching the sensors, each beam falling on a different sensor array. Electronic circuitry associated with each sensor array combines the signals from the sensors representing the red, blue and green components of the picture, to form a standard video signal. The infra-red image is used to detect scratches and dirt on the film. Since colour film dyes are transparent to infra-red light, the infra-red image should be uniform across the field. Any lack of uniformity indicates a scratch or speck of dirt, which do not transmit infra-red light. The infra-red image is used to control further processing of the video signal so that scratches and dirt are not shown in the television picture.

The performance requirements placed on the objective lens of a telecine projector are severe. The image size must be constant at each or the four sensors to within about 0.3%. This can be achieved by appropriate positioning of the sensors along the light path. However, the four images are also required to be sufficiently well focused at the sensors (including the infra-red sensor) that the resultant television picture appears sharp. The wide working spectrum and the extremely large objective lens aperture required (typically N.A. 0.15) makes the simultaneous achievement of sharp focus and equal image size very difficult to obtain. Indeed, at one stage in our research, we were led to believe that achieving satisfactory results in both respects was not possible.

Apparatus according to the present invention is characterised in that it comprises second means (36) for splitting light into a plurality of beams (37a, 37b) containing different wavelength ranges respectively, means (40) in the path of one or more but not all the plurality of beams for reducing the effective aperture of the objective lens (30) for light in each said beam and means (38) for recombining the beams (37a, 37b) prior to their passage through the objective lens (30).

Further features of the invention are detailed in the appended claims to which reference should now be made.

As will be appreciated from the description below, the invention enables the construction of an improved telecine projector, in which the objective lens has a smaller effective aperture for infra-red light than for visible light. Accordingly, the sensors may be positioned to receive equal image sizes, and the objective set for optimum focus of visible light at the red, green and blue sensors, whereupon the infra-red sensor, although not at the theoretical infra-red focal plane of the lens, receives a satisfactorily sharp picture by virtue of the increased depth of field of the infra-red image.

Throughout this document the term "lens" is used to mean not only a single, simple lens, but also a compound lens and a system of simple or compound lenses.

The invention will be described in more detail with reference to the drawings which show examples of apparatus embodying the invention and in which:

Figure 1a is a section through a simple two element lens system which individually processes images of different wavelengths;

Figure 1b shows the aperture stop of the system of Figure 1a; and

Figure 2 is a schematic view of a telecine projector embodying the invention.

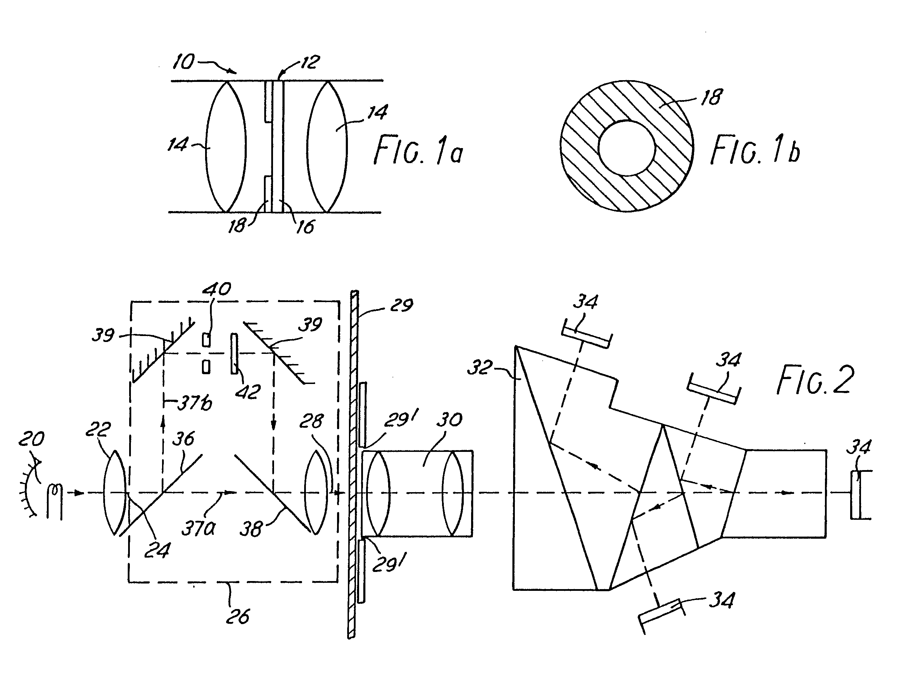

Figure 1a shows a simple two element lens 10. An aperture stop 12 is positioned between the two elements 14 of the lens 10. The aperture stop 12 comprises a disc 16 of material transparent across the working spectrum. The disc is coated in an annular region 18 with a dichroic material which is opaque to a part only of the working spectrum. The annulus is centred on the light transmission axis of the lens 10. For instance, the coating may be transparent to all but the infra-red component of a beam passing through the lens 10. The stop 12 accordingly provides a reduced effective aperture of the lens for part of the spectrum with respect to the effective aperture of the lens for the remainder of the spectrum, since infra-red light "sees" an aperture of the inner diameter of the annular region 18, while the remainder of the spectrum is unaffected by the dichroic coating and "sees" an aperture of the outer diameter of the elements 14, that is, the outer diameter of the annular region 18.

It is well known that the depth of field in which an image can be considered sharply in focus increases with decreasing aperture size. Therefore, the depth of field for an infra-red image formed by the lens 10 is greater than the depth of field of images at other wavelengths. An objective lens system of a telecine camera, incorporating a lens like the lens 10, can be adjusted to provide a well-focused image at visible wavelengths and having a desired image size. The infra-red sensor may be positioned to detect an infra-red image of the same size. Although the sensor may need to be at a position other than the theoretical infra-red image plane, adequately sharp focusing at the sensor arises from the increased depth of field for infra-red. The television image resulting from the projector is thereby improved, since equality of image size and sharp focus are both provided.

The reduced aperture for infra-red results in an infra-red image of reduced brightness. This is not detrimental to the final television picture for several reasons. Firstly, the light sources commonly used in telecine projectors emit more strongly at infra-red wavelengths than at visible wavelengths. Secondly, CCD sensors are more sensitive to infra-red light than they are to visible light. Finally, the infra-red image is only required to be sufficiently bright to allow the sensor to discriminate between areas of film which do and do not transmit infra-red, that is, between unblemished and blemished areas. Otherwise, the absolute brightness of the infra-red image is not important.

The lens 10 is uncomplicated but does present some problems in some circumstances. Films may vary considerably in their density, that is their light transmissivity. Variable density filtering is often needed between the light source and the film to compensate for this, so that the television image is of constant brightness, regardless of film density. Such filtering used in conjunction with the lens 10 would result in a varying brightness infra-red image. The threshold brightness at which the sensor is triggered to detect a blemish would consequently have to be moved in sympathy with changes in the filter density. This would lead to undesirable complication in the processing of the sensor outputs.

Figure 2 shows schematically a telecine projector which overcomes this problem, and provides a constant brightness infra-red image regardless of film density.

A light source 20 and lens 22 generate a light beam 24 which enters optical apparatus 26, which will be described in more detail later. The beam 28 leaving the apparatus 26 illuminates film 29, which is fed through a film gate 29'. An objective lens 30 focuses light passing through the film 29. A prism block 32 splits the focused beam into its blue, green, red and infra-red components, which arrive at respective sensor arrays 34.

The beam 24 contains light with wavelengths ranging from about 400 nm to about 900 nm. Within the apparatus 26, a dichroic-coated mirror 36 transmits light with a wavelength below about 650 nm (substantially all the visible light) as a beam 37a, and reflects the rest of the light in the beam 24 (substantially only infra-red light) as a beam 37b.

The visible beam 37a passes, undeflected, to a second dichroic-coated mirror 38, coated with the same coating as the mirror 36. The infra-red beam 37b is directed to the mirror 38 by two fully reflecting mirrors 39. The mirror 38 transmits the visible beam 37a and reflects the infra-red beam 37b thereby recombining the beams as a single beam 28.

An aperture stop 40 is positioned at or near the point at which an image of the filament of the light source 20 is formed by the lens 22. The stop 40 reduces the diameter of the cone of infra-red light which is recombined with the visible light by the mirror 38 and enters the objective lens 30. The reduction in diameter serves to reduce the effective aperture of the objective 30 for infra-red light, so as to provide an increased depth of field for infra-red, and hence the increased performance already described above with reference to Figures 1a and 1b. Briefly, the objective lens is set to provide a sharply focused image at visible wavelengths at the sensors 34, which are positioned (including the infra-red sensor) to give an image of equal size. Satisfactorily sharp focus of the infra-red image is ensured by the reduced effective aperture of the objective lens for infra-red light.

Other lenses may be provided in the apparatus 26, for instance to compensate for the difference in path length of the visible and infra-red beams 37a, 37b. A filter 42 may also be used in the beam 37b to further reduce the width of the spectrum of the beam.

In order to compensate for different film densities, a variable density filter (not shown) may be put in the path of the visible beam 37a. The brightness of the visible image can then be controlled while the infra-red image is entirely unaffected, so that the trigger level of the infra-red sensor can remain constant.

## Claims

1. Apparatus for individually processing optical images of different wavelength ranges, comprising an objective lens (10, 30), means (32) for splitting light passed by the objective lens into a plurality of beams containing different wavelength ranges respectively, and separate image receptors (34) for the respective beams, characterised in that it comprises second means (36) for splitting light into a plurality of beams (37a, 37b) containing different wavelength ranges respectively, means (40) in the path of one or more but not all the plurality of beams for reducing the effective aperture of the objective lens (30) for light in each said beam and means (38) for recombining the beams (37a, 37b) prior to their passage through the objective lens (30).

2. Apparatus according to claim 1, characterised in that the means (12) providing a reduced effective aperture comprise an aperture stop (18) made of material opaque to one or more but not all of the different wavelength ranges.

3. Apparatus according to claim 2, characterised in that the opaque material is a dichroic material.

4. Apparatus according to any preceding claim, characterised in that the processing means (26) comprises an aperture stop (40) positioned to reduce the diameter of the cone light of the wavelength range being processed which enters the objective lens (30).

5. Apparatus according to any preceding claim, characterised by a filter (42) in the path of one (37b) of the plurality of beams.

6. Apparatus according to claim 5, characterised in that the filter is a variable density filter in the path of an unprocessed one of the plurality of beams.

7. Apparatus according to any preceding claim, characterised in that the second beam-splitting means (32, 36) comprises a dichroic mirror.

8. Apparatus according to any of claims 4 to 7, characterised in that the means (38) for recombining the beams (37a, 37b) comprises a dichroic mirror.

## Patentansprüche

1. Einrichtung zur individuellen Verarbeitung optischer Bilder verschiedener Wellenlängenbereiche, mit einem Objektiv (10, 30), mit einer Vorrichtung (32) zum Aufteilen von Licht, das durch das Objektiv hindurchgetreten ist, in eine Mehrzahl von Bündeln, welche jeweils verschiedene Wellenlängenbereiche enthalten, und mit getrennten Bildempfangsvorrichtungen (34) für die jeweiligen Bündel, gekennzeichnet durch eine zweite Vorrichtung (36) zum Aufteilen von Licht in eine Mehrzahl von Bündeln (37a, 37b), welche jeweils verschiedene Wellenlängenbereiche enthalten, ferner durch eine im Weg mindestens eines jedoch nicht aller dieser Mehrzahl von Bündeln angeordnete Vorrichtung (40) zur Begrenzung der wirksamen Apertur des Objetivs (30) für das Licht jedes dieser Bündel, und durch eine Vorrichtung (38) zum Vereinigen der Bündel (37a, 37b) von ihrem Hindurchtreten durch das Objektiv (30).

2. Einrichtung nach Anspruch 1, dadurch gekennzeichnet, daß die Vorrichtung (12), die die wirksame Apertur begrenzt, eine Aperturblende (18) aus einem Material welches für mindestens einen jedoch nicht alle der verschiedenen Wellenlängenbereiche opak ist, enthält.

3. Einrichtung nach Anspruch 2, dadurch gekennzeichnet, daß das opake Material ein dichroitisches Material ist.

4. Einrichtung nach einem der vorhergehenden Ansprüche, dadurch gekennzeichnet, daß die Verarbeitungseinrichtung (26) eine Aperturblende (40) enthält, die so angeordnet ist, daß den Durchmesser des in das Objektiv (30) eintretenden Kegel des Lichtes des verarbeiteten Wellenlängenbereiches verringert.

5. Einrichtung nach einem der vorhergehenden Ansprüche gekennzeichnet durch ein Filter (42) im Weg eines (37b) der Mehrzahl von Bündeln.

6. Einrichtung nach Anspruch 5, dadurch gekennzeichnet, daß das Filter ein Filter variabler Dichte im Weg eines unverarbeitenden Bündels der Mehrzahl von Bündeln ist.

7. Einrichtung nach einem der vorhergehenden Ansprüche, dadurch gekennzeichnet, daß die zweite Bündelteiler-Vorrichtung (32, 36) einen dichroitischen Spiegel enthält.

8. Einrichtung nach einem der Ansprüche 4 bis 7, dadurch gekennzeichnet, daß die Vorrichtung (38) zum Vereinigen der Bündel (37a, 37b) einen dichroitischen Spiegel enthält.

## Revendications

1. Appareil permettant de traiter individuellement des images optiques de différentes gammes de longueurs d'onde, comprenant un objectif (10, 30), un moyen (32) permettant de diviser la lumière qui a traversé cet objectif en de multiples faisceaux contenant respectivement différentes gammes de longueurs d'onde, et des récepteurs d'image distincts pour les différentes faisceaux, caractérisé en ce qu'il comprend un second moyen (36) permettant de diviser la lumière en de multiples faisceaux (37a, 37b) contenant respectivement différentes gammes de longueurs d'onde, un moyen (40) disposé sur le trajet d'un ou plusieurs faisceaux, mais non pas sur la totalité, et permettant de réduire l'ouverture efficace de l'objectif (30) pour la lumière présente dans chacun desdits faisceaux, et un moyen (38) permettant de recombiner les faisceaux (37a, 37b) avant leur passage à travers l'objectif (30).

2. Appareil suivant la revendication 1, caractérisé en ce que les moyens (12) fournissant une ouverture efficace réduite comprennent un diaphragme d'ouverture (18) réalisé en un matériau opaque à une ou plusieurs des différentes gammes de longueurs d'onde, mais pas à toutes.

3. Appareil suivant la revendication 2, caractérisé en ce que la matière opaque est une matière dichroïque.

4. Appareil suivant l'une quelconque des revendications précédentes, caractérisé en ce que les moyens de traitement (26) comprennent un diaphragme d'ouverture (40) disposé de façon à réduire le diamètre du cône de lumière de la gamme de longueurs d'onde faisant l'objet du traitement et qui pénètre dans l'objectif (30).

5. Appareil suivant l'une quelconque des revendications précédentes, caractérisé par un filtre (42) disposé sur le trajet de l'un (37b) des multiples faisceaux.

6. Appareil suivant la revendication 5, caractérisé en ce que le filtre est un filtre à densité variable disposé sur le trajet de l'un des multiples faisceaux qui n'est pas soumis au traitement.

7. Appareil suivant l'une quelconque des revendications précédentes, caractérisé en ce que le second moyen de division de faisceau (32, 38) est constitué par un miroir dichroïque.

8. Appareil suivant l'une quelconque des revendications 4 à 7, caractérisé en ce que le moyen (38) permettant de recombiner les faisceaux (37a, 37b) comporte un miroir dichroïque.

FIG. 1a

FIG. 1b

FIG. 2

EP 0 174 778 B1